# EUROPEAN PATENT SPECIFICATION

(11) **EP 0 805 310 B1**
(45) Date of publication and mention of the grant of the patent: **08.05.2002**
(21) Application number: 97500042.3
(22) Date of filing: 24.02.1997
(51) Int. Cl.: F24C 3/12

(54) **Gas tap for stoves with safety device actioning mechanism**
Gashahn für Kochherde mit einer Zündsicherungsvorrichtung
Robinet à gaz pour cuisinières avec un méchanisme d'actionnement du dispositif de sécurite

(30) Priority: 03.05.1996 ES 9600999
(43) Date of publication of application: 05.11.1997
(73) Proprietor: FAGOR, S.Coop, 20500 Mondragon (Guipuzcoa) (ES)
(72) Inventor: Ayastuy Aretxaga, Inaki, Altos Hornos, 20570 Bergara (Guipuzcoa) (ES)

(56) References cited:
- DE-A- 2 943 996
- FR-A- 2 583 506
- FR-A- 2 587 453

## Description

The present invention relates to a gas tap for domestic stoves provided with a thermoelectric safety valve and, particularly to a mechanism incorporated to the tap for the operation of their both the safety and the regulation valves.

### Prior Art

Domestic gas stoves whose surface burners require gas taps with a flame safety thermoelectric device present the problem of operation of the tap shaft during lighting of burner, until the flame-detector thermocouple was hot to feed the safety electromagnet, the safety valve must be open, for which it is pushed by a movement of axial sliding of the operating shaft. This first lighting movement is followed by a second movement, rotating the operating shaft to regulate the gas flow by rotation of the regulation valve cone. In stoves where the tap is distanced from the rotary control knob, a cardan transmission is coupled between the knob and the tap shaft by means of a telescopic arm, but the latter contracts without displacing the tap shaft, and only transmits the rotation movement to it.

DE-2943996 describes an actioning mechanism in a gas safety tap for stoves with the function of making both movements of the operating shaft, the axial advance during the burner lighting, and the rotational movement to open and regulate the gas flow, in a single knob rotation movement, converting the movement of the tap shaft with the cooperation of a cursor dowel inserted radially on the shaft.

### Disclosure of the invention

The object of the invention is a gas tap with flame safety device for domestic stoves, provided with a mechanism for actioning the operating shaft that is incorporated inside the tap to make, in a single movement of rotation of the control knob, the axial advance of the operating shaft during burner lighting for the opening of the safety valve, followed by the rotary movement of the valve cone for regulation of the gas flow.

The gas safety tap with for stoves which is the object of the invention, incorporating a gas flow regulation cone in the body of the tap, a hollow cover over the body of the tap at its front end and a electrical take-off from the safety thermocouple at the rear end, comprises:
- an interior rod axially prolonging the operating shaft, fixed to it and crossing the regulation cone to push the safety valve, and which is provided with a helical spring to force the shaft to its initial position relative to the axial advance, and a seal gasket;
- a stop dowel inserted in the operating shaft which stops on the cover of the tap against the axial thrust by the helical spring, and that limits the angle of rotation of the shaft, and a cursor dowel which cooperates in the conversion of the rotation movement of the control knob in a shaft axial advance and which is retractable to a housing orifice in the shaft, due to its seating on an internal spring;
- a hollow cover which covers the body of the tap at its front end, on the inside surface of which a slide ramp is formed along which the cursor dowel runs for the conversion of the movement, and said slide ramp comprises a forward sector which is run in one of the directions of rotation and a return sector in the opposite direction of rotation;
- a connection adaptor coupled externally to the electromagnet on the rear end of the tap and provided with a spring which permits the retrocession of the electromagnet when pushed, and with a seal gasket.

The gas tap with safety device which is the object of the invention has the advantages of simplicity of construction and small size, not containing any body part in addition to a common safety tap, since the guide ramp of the cursor dowel is formed inside a known cover of a common tap, and the devices which permit the return of the electromagnet are included in the rear connection adaptor, which hardly increases the overall tap length. The formation in two sections of the slide ramp for the conversion of the movement, the forward for advance, and backward for returning, reduces wear of the surface of the cover to half in each operation of the rotary knob, thereby maintaining the precision of the movement during the statutory total number of rotation operations of the tap life time.

### Description of the Drawings

FIG.1 is a longitudinal cross-section view of the gas tap with security for stoves with the operating mechanism which is the object of the invention.

FIG. 2 is a partial cross-section of the cover of the tap, along an axial plane, showing its interior surface with the slide ramp extended.

FIG. 3 is a view along the axial direction of the tap, of the slide ramp from figure 2.

### Detailed Description of the Invention

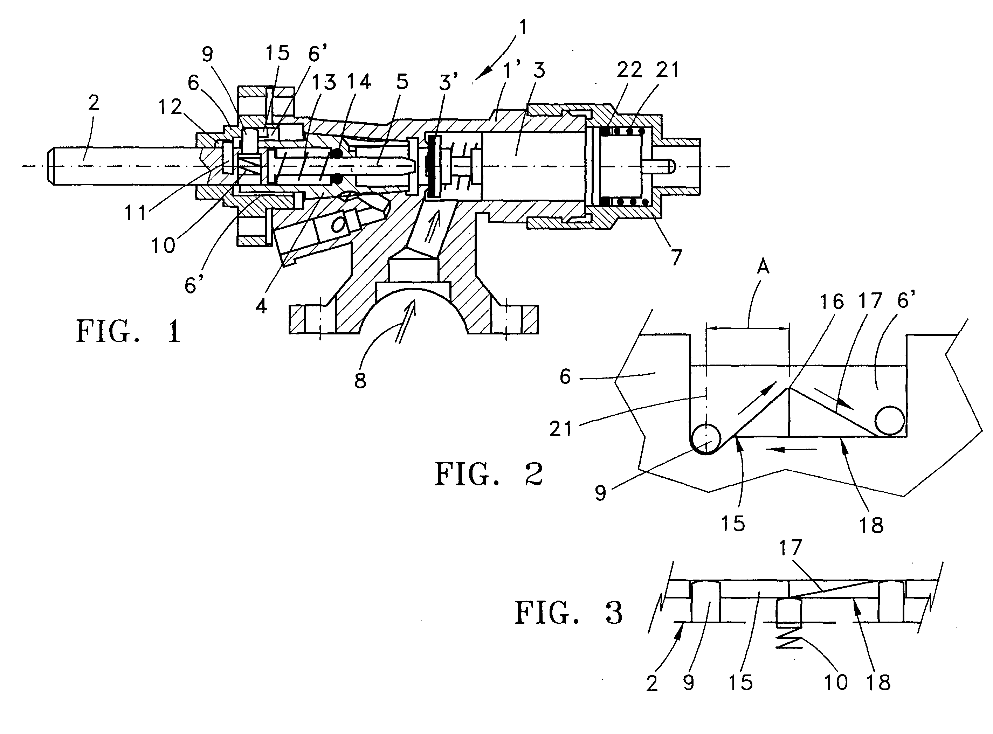

With reference to figures 1 to 3 showing the preferred embodiment 1 of the gas tap with electromagnet safety device which is the object of the invention, which incorporates the mechanism for actioning the operating shaft 2 into the tap 1, to open the safety valve 3' associated with the electromagnet 3 and to regulate the flow 8 of gas by the valve of the regulation cone 4, whose rotation is associated to that of the shaft 2 for the gradual opening of the flow of gas and limited to a 160° angle, while the shaft 2 slides axially inside the cone 4 to open the valve 3' permitting the gas lighting. For this additional function pushing the valve 3', the shaft 2 extends in the rod 5 which is fixed to it, being of smaller diameter and provided with the helical spring 13 to urge the shaft 2 toward its initial rest position and with the seal gasket 14.

The gas safety tap 1 with for stoves comprises, in addition to the said elements, a cover 6 over the body 1' of the tap at its front end, mould-formed in aluminium or rigid plastic reinforced with glass fibre to increase its resistance to wear, being the interior surface 6' of the cover 6 of various stepped diameters, and also comprises the adaptor 7 with a electrical connector for the flame detector thermocouple, which is screwed to the rear end of the body 1' of the tap for coupling the electromagnet (3) for said connection, and is provided with the helical spring 21 which permits the retrocession of the electromagnet 3 and with a seal gasket 22.

Inserted radially on the shaft 2 for operation of the tap are the stop dowel 11 and the cursor dowel 9, axially separated a certain distance, both inside the cover 6. The stop dowel 11 situated closer to the end of the tap fits into a recess 12 in the interior surface 6' of the cover, on the step of smallest diameter, in which the dowel forms a stop which must bear a minimum tangential force on the shaft 2, necessary at both limits of the angle of rotation. The end of the dowel 9 lodged in the shaft 2 is seated on a spring 10 which allows it to return partially, and it is of greater diameter than the stop dowel 11, and projects beyond the shaft 2 by a substantially greater measure until reaching the interior surface 6' of the cover 6. Thickening its wall toward the interior, the cover 6 the slide ramp 15, 16, 17, 18 is formed, along which the dowel 9 runs in the direction indicated by the arrows, as showing in figure 2, during the rotation of the shaft 2.

In the direction of rotation for opening the flow of gas, the dowel 9 runs along the two ramp sections, upward 15 and downward 17, which form a triangular profile and reaching the vertex 16 of the ramp shaft 2 has advanced axially by the necessary measure to push the safety valve 3'. At each end of the ramp 15, 16, 17, there is a respective cavity 23 and 24 for the positioning of the dowel 9, corresponding to the initial position of the rotation of the shaft 2 and to its final position, open to the gas flow. The upward section 15 of the ramp is run by the dowel 9 on an angle A of rotation of the shaft 2, of approximately 60°, by which an axial advance is made of the shaft 2, of approximately 5 mm. To reduce the wear of the ramp 15, 17 and of the interior surface of the cover 6 due to friction with the dowel 9, during the rotation of the shaft 2 in the opposite direction closing the gas flow, the dowel 9 returns to its initial position by another sliding section 18, after being retracted toward the interior of its housing in the shaft 2 as shown in figure 3. To facilitate the retraction of the dowel 9, due to the thrust of the shaft spring 13, it is necessary to prevent the dowel 9 from rubbing against a radial surface of the cover. The stop dowel 11 is positioned therefor at a distance from the dowel 9 so that, when the shaft 2 returns, it is which first runs into another radial step surface of the cover 6.

## Claims

1. A gas tap with a safety device for domestic stoves, provided with an actioning mechanism (5,7,9,10,11,15) incorporated in the interior of the tap and associated to the rotation of the operating shaft (2) to open their both the flame safety valve (3') associated to an electromagnet (3) and the cone valve (4) for regulation of the gas flow (8), which converts the rotation of the tap operating shaft (2) in its axial advance and push the safety valve (3'), with the collaboration of a cursor dowel (9) which protrudes radially on the operating shaft (2), **characterized by**,
- an axial rod (5) fixed to the operating shaft (2) to push the safety valve (3'), provided with a retrocession spring (13) and a seal gasket (14);
- a stop dowel (11) for stopping the rotation of the shaft and a cursor dowel (9), distanced by a determined measure, the cursor dowel (9) being retractable in a housing of the operating shaft (2) and protruding radially more than the stop dowel (11);
- a cover (6) which is mould formed, covering the body (1') of the tap, having a slide ramp (15,16,17,18) formed on its interior surface (6') along which the cursor dowel (9) runs for conversion of the rotation movement of the shaft into an axial advance;
- a connection adaptor (7) coupled on the rear end of the tap (1) which permits the retrocession of the electromagnet (3) when pushed.

2. The gas tap according to claim 1 wherein said slide ramp (15,16,17,18) comprises a triangular section (15,16,17) which is run in one direction of the shaft rotation, and a return ramp (18) in the opposite direction.

## Patentansprüche

1. Gashahn mit Sicherung für Haushaltskochherde mit einem Betätigungsmechanismus (5,7,9,10,11,15), der im Inneren des Hahns enthalten und mit der Drehung der Betriebsachse (2) verbunden ist, zum Öffnen beider Ventile (3',4) des Hahns (1), des Flammensicherheitsventils (3') welches mit einem Elektromagneten verbunden ist, und des Kegelventils (4) zur Regulierung der Gasstrommenge (8), wobei der Mechanismus die Drehbewegung der Betriebsachse (2) in einen axialen Vorschub der Achse (2) zum Schieben des Sicherheitsventils (3') mit der Unterstützung eines Schiebestifts (9) der radial aus der Betriebsachse (2) hervorsteht umwandelt, **dadurch gekennzeichnet, dass** der Betätigungsechanismus umfaßt
- einen Zapfen (5), der mit der Betriebsachse (2) kraftschlüssig ist, für den Schub des Sicherheits-ventils (3'), und mit einer Rückstellschraubenfeder (13) und einer Abdichtungsscheibe (14) versehen ist;
- einen Anschlagstift (11), zum Anhalten der Drehung der Achse, und einen Schiebestift (9), die in einer bestimmten Entfernung voneinander positioniert sind, wobei der Schiebestift (9) in seine Positionierung in der Betriebsachse (2) zurückziehbar ist und in größerem Maße als der Anschlagstift (11) radial hervorsteht;
- eine Abdeckung (6), die durch Formen hergestellt ist und den Körper (1') des Hahns bedeckt, und in ihrer Innenfläche (6') eine Gleitrampe (15,16,17,18) aus-bildet, welche der Schiebestift (9) passiert, um die Drehbewegung der Achse in axialen Vorschub umzuwandeln;
- einen Anschlußstutzen (7) am hinteren Ende des Hahns (1), der das Zurückweichen des Elektromagneten (3) gestattet.

2. Gashahn mit Sicherung nach Anspruch 1, wobei die Gleitrampe (15,16,17,18) einen Abschnitt (15,16,17), der in einer Drehrichtung passiert wird, und eine Rückführrampe (18) in der Drehgegenrichtung umfaßt.

## Revendications

1. Robinet à gaz avec sécurité pour cuisinières avec un mécanisme (5,7,9,10,11,15) d'actionnement incorporé à l'intérieur du robinet et associé à la rotation de l'axe (2) d'entrâinement, pour ouvrir les deux soupapes (3'4) du robinet (1), celle de sécurité (3') de flamme associée à un électroaimant (3) et celle du cône (4) de régulation du débit (8) du gaz, mécanisme qui transforme le mouvement de rotation de l'axe (2) d'entrâinement en une progression axiale de l'axe (2) pour pousser la soupape de sécurité (3'), avec l'aide d'un piton (9) curseur qui ressort radialement de l'axe (2) d'entrâinement, **caractérisé en ce que** le mechanism (5,7,9,10,11,15) d'actionnement comprend
- une tige (5) solidaire avec l'axe (2) d'entrâinement pour la poussée de la soupape (3') de sécurité, pourvue d'un ressort hélicoïdal (13) de rappel et d'un joint d'étanchéité (14);
- un piton (11) de butée pour stopper la rotation de l'axe et un piton (9) curseur, séparés l'un de l'autre par une certaine distance, le piton curseur (9) se rétractant dans son logement de l'axe (2) d'entrâinement et ressortant radialement sur une plus grande distance que le piton (11) de butée;
- un couvercle (6) fait par moulage, couvrant le corps (1') du robinet, dans lequel est formée une rampe de coulissement (15,16,17,18) sur sa superficie intérieure (6') que le piton curseur (9) parcourt pour la conversion du mouvement de rotation de l'axe en avance axial;
- un raccord (7) de connexion à l'extrémité arrière du robinet (1), qui permet le rappel de l'électroaimant (3).

2. Robinet à gaz avec sécurité selon la revendication 1 sur lequel cette rampe (15, 16, 17, 18) de coulissement comprend un tronçon (15,16,17) parcouru dans un sens de la rotation et une rampe de rappel (18) dans le sens contraire de rotation.
